# EUROPEAN PATENT SPECIFICATION

(11) **EP 1 264 787 B1**
(45) Date of publication and mention of the grant of the patent: **14.12.2005**
(21) Application number: 02012315.4
(22) Date of filing: 04.06.2002
(51) Int. Cl.: B65G 27/32, B65G 27/24, G05D 19/02

(54) **Parts feeder and control method thereof**
Zuführeinrichtung und Steuerungsverfahren dafür
Dispositif d'alimentation de pièces et son procédé de commande

(30) Priority: 04.06.2001 JP 2001168105
(43) Date of publication of application: 11.12.2002
(73) Proprietor: YKK Corporation, Chiyoda-ku, Tokyo (JP)
(72) Inventor: Yagi, Susumu, Shimoniikawa-gun, Toyamaken (JP); Takase, Hiroto, Uozu-shi, Toyama-ken (JP)
(74) Representative: Casalonga, Axel

(56) References cited:
- EP-A- 0 629 568
- EP-A- 0 699 604
- CH-A- 664 708
- US-A- 5 012 428

## Description

### BACKGROUND OF THE INVENTION

### 1. FIELD OF THE INVENTION

The present invention relates to a parts feeder for vibrating a bowl etc. that accommodates various parts by vibration of electromagnet or piezoelectric vibrator to feed the parts and control method thereof.

### BACKGROUND OF THE INVENTION

Conventionally, vibrating parts feeder have been used for feeding parts to a production line.

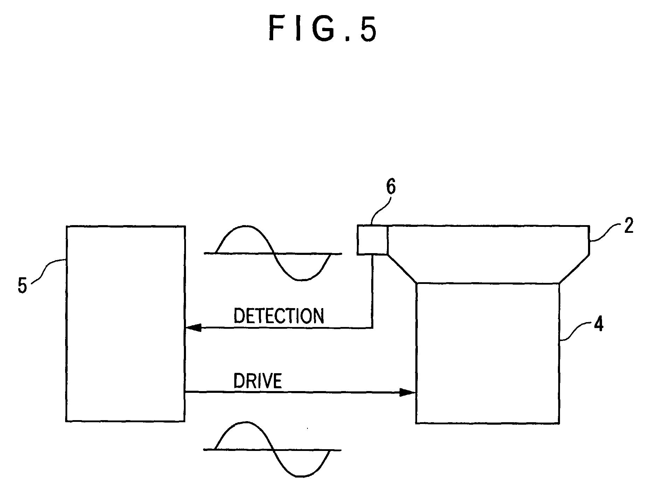

Fig. 5 shows a piezoelectric vibrating parts feeder as an example of vibrating parts feeders. The piezoelectric vibrating parts feeder has a bowl 2 as a parts discharger for accommodating the parts to be fed and discharging the parts by vibration, a vibrating unit 4 having a piezoelectric vibrator for driving the bowl 2 at a predetermined frequency, and a controller 5 for controlling the operation of the vibrating unit 4.

In order to appropriately control the vibration of the bowl 2, an amplitude sensor 6 such as photoelectric converter and piezoelectric element is provided to the vibrating parts feeder to electrically detect the amplitude of the bowl 2, the detection signal being fed back to the controller 5 to adjust electric current or voltage for driving the bowl 2, so that the bowl 2 is driven at a constant amplitude.

In another arrangement, a current sensor and a voltage sensor are provided to a drive control circuit such as the controller 5 and the vibration of the bowl 2 is recognized by processing the detection signal from the sensors, so that the vibration of the bowl 2 is appropriately controlled by controlling the operation of the vibrating unit 4 based on the result of the processing (see Japanese Patent JP 7060187 A, Japanese Patent JP 10049237 A). In such an arrangement, there is no need for providing a special amplitude sensor to the bowl 2.

However, in the above-described conventional arrangement, when the feedback signal is averaged and converted into direct current for controlling, the control accuracy is deteriorated when the signal is distorted since the signal is averaged while being mixed with a signal other than the frequency component contributing to transfer.

Further, when the frequency of the feedback signal is swept and controlled with a point having maximum amplitude being set as a resonance frequency, since the phase cannot be detected, the shift in the resonance frequency during operation cannot be tracked.

EP 0 629 568, according to the preamble of claim 1, discloses a drive control method for a self-excited vibration parts feeder which includes a parts feeder unit and a drive power supply and a control unit supplying an electric power of a desired frequency to a vibration generating unit. The control portion has a Fourier transformer that feeds back and applies Fourier transform on a detection signal indicating the vibration of the vibrator. A harmonic analyzing means is provided for separating the detecting current into components of different frequencies and a frequency converting circuit controls the drive circuit.

An object of the present invention is to provide a control method of a parts feeder capable of highly accurate control with a simple structure and capable of conducting accurate vibration.

A parts feeder according to an aspect of the present invention includes: a vibration element for vibrating a parts discharger; a drive circuit for driving the vibration element; and a control portion for sending drive signal of a predetermined drive frequency to the drive circuit to vibrate the vibration element at the drive frequency, the parts feeder characterized in that the control portion has a Fourier transformer that feeds back and applies Fourier transform on a detection signal indicating vibration of the vibrator, a separator for separating the transformed feedback signal into a transfer signal component working for transferring parts and a noise component other than the transfer signal component, and a drive controller for controlling the drive circuit based on the separated transfer signal component. The detection signal indicating the vibration of the vibration element is a feedback signal generated by detecting vibration from the vibrating unit or discharger by a vibration sensor.

A control method of a parts feeder according to an aspect of the present invention includes: a vibration element for vibrating a parts discharger; a drive circuit for driving the vibration element; and a control portion for sending drive signal of a predetermined drive frequency to the drive circuit to vibrate the vibration element at the drive frequency, the method characterized in that the vibration is detected by a vibration sensor provided on a part of vibrating unit or the discharger. Alternatively, output from the vibration element may be used to be a feedback signal, the vibration signal being used as the feedback signal and the detection signal showing the vibration of the vibration element is fed back and applied with Fourier transform by the control portion to separate the converted feedback signal into a transfer signal component working for transferring parts and a noise component other than the transfer signal component, the drive circuit being controlled based on the separated transfer signal component.

In the present invention, the control by the control portion may be arranged as desired, where the amplitude of the discharger may become constant, resonance frequency may be automatically tracked or the vibrating force on the discharger may become constant. The signal obtained by the vibration element may be sampled and converted from analog to digital at a predetermined cycle for conducting Fourier analysis by the control portion.

In the present invention, the respective signals such as the detection signal may use the voltage and electric current. When the signal represents voltage, voltage wave, drive voltage, voltage sensor and drive voltage wave are used. When the signal represents electric current, current wave, drive current, current sensor and drive current wave are used. The discharger refers to a bowl in an ordinary parts feeder and refers to a transfer trough in a linear feeder. In other words, the discharger of the present invention refers to a means capable of discharging parts such as a bowl and a transfer trough.

### In the drawings:

Fig. 1 is a schematic block diagram showing a parts feeder according to an embodiment of the present invention;
Fig. 2 is a flow chart showing control process of the parts feeder of the aforesaid embodiment;
Fig. 3 is a graph showing the relationship between resonance frequency and amplitude of the parts feeder of the aforesaid embodiment;
Fig. 4(A) is a graph showing a signal representing the drive of the parts feeder of the aforesaid embodiment, Fig. 4(B) is a graph showing a transfer signal component obtained by Fourier transform, Fig. 4(C) is a graph showing a noise component; and
Fig. 5 is a schematic illustration showing the control unit of a conventional parts feeder.

An embodiment of the present invention will be described below with reference to attached drawings.

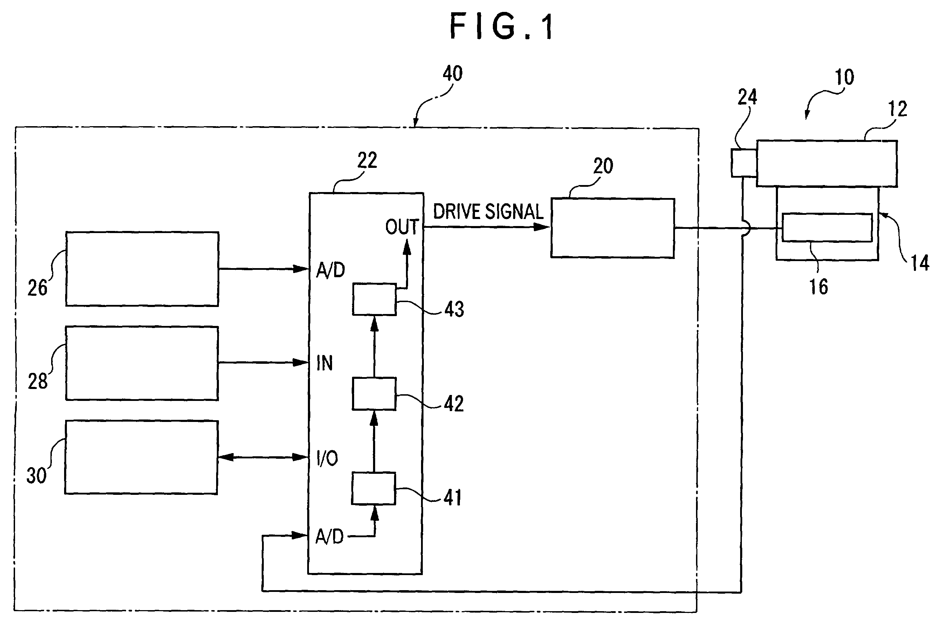

A parts feeder 10 according to the present embodiment is a piezoelectrically vibrating type, which includes a bowl 12 for accommodating, vibrating and discharging various parts, and a piezoelectric vibrating unit 14 for vibrating the bowl 12 as shown in Fig. 1. The piezoelectric vibrating unit 14 has an elastic support (not shown) supporting the bowl 12 and a piezoelectric vibrator 16 as a vibration element for vibrating the bowl 12 through the elastic support. A control unit 40 for driving the piezoelectric vibrator 16 is provided.

The control unit 40 has a drive circuit 20 having a power amplifier etc. connected to the piezoelectric vibrator 16. The drive circuit 20 is connected to an output terminal of a control portion 22 composed of a microcomputer for sending drive signal of the piezoelectric vibrator 16. A vibration sensor 24 for detecting vibration of the bowl 12 is connected to the bowl 12, the output of the vibration sensor 24 being connected to A/D conversion input terminal of the control portion 22.

An amplitude setting circuit 26 for adjusting amplitude of the piezoelectric vibrator 16 through the drive circuit 20 is connected to the control portion 22. A mode setting circuit 28 is also connected to the control portion 22 for switching the drive mode of the parts feeder 10 between adjustment mode and operation mode. A nonvolatile memory 30 as a memory element for storing data such as predetermined voltage, phase difference and frequency and inputting and outputting the data to the control portion 22 is further provided.

A Fourier transformer 41 for feeding back and applying Fourier-transform on a detection signal indicating vibration of the vibrating element, a separator 42 for separating the transformed feedback signal into a transfer signal component working for transferring the components and a noise component other than the transfer signal, and a drive controller 43 for controlling the drive circuit based on the separated transfer signal component is provided to the control portion 22. The above respective components can be installed as software of a program executed on a microcomputer system constituting the control portion 22. On the other hand, sheer hardware arrangement may be used for achieving the above function.

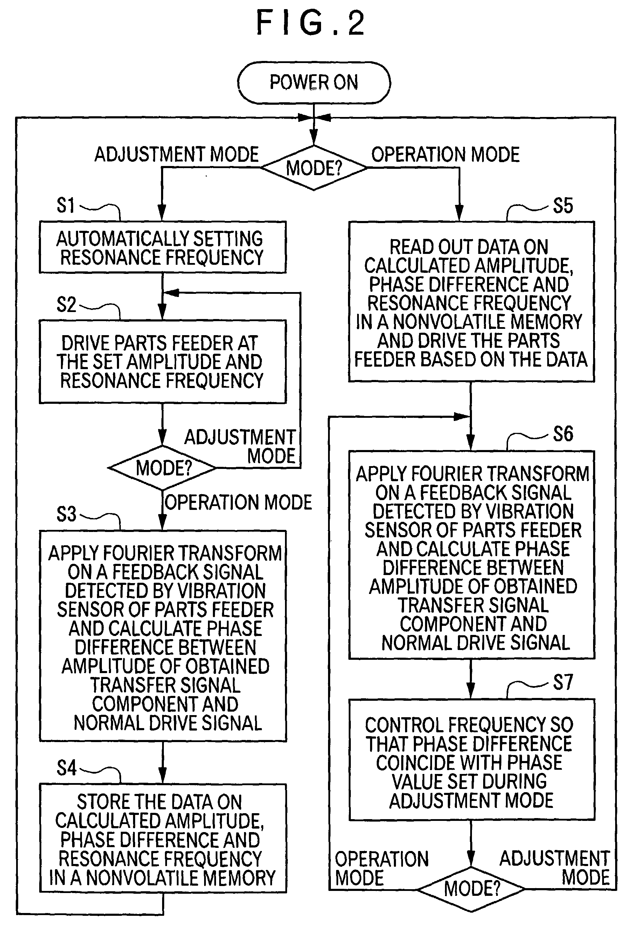

Figs. 2 to 4 show how to drive and control the piezoelectric vibrating parts feeder 10 according to the present embodiment.

When the parts feeder 10 is driven, the power of the parts feeder 10 is initially turned on and the drive mode of the parts feeder 10 is selected by the mode setting circuit 28.

Ordinarily, resonance frequency of the piezoelectric vibrating parts feeder 10 is measured in shipping out the piezoelectric vibrating parts feeder 10 and is stored in the nonvolatile memory 30. On the other hand, when the natural frequency of the vibration system is changed by exchanging the bowl 12 or other components, since the resonance frequency also changes, the resonance frequency is measured and is stored in the nonvolatile memory 30. The adjustment mode is used in conducting the above steps.

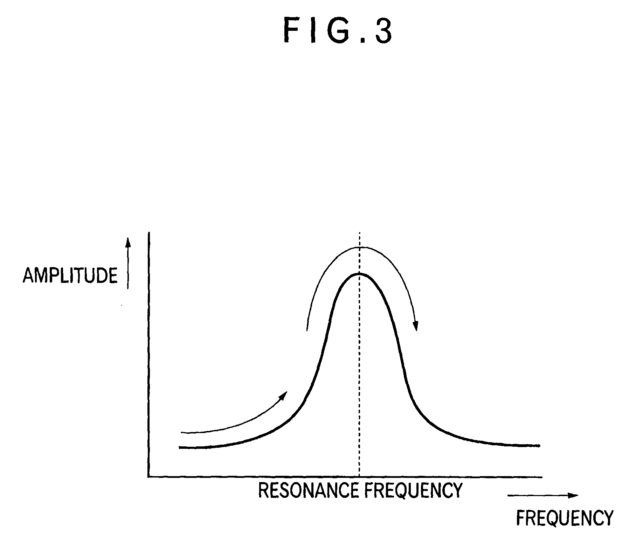

In the adjustment mode, the amplitude of the piezoelectric vibrating unit 14 becomes the maximum at the resonance frequency of the entire unit including the bowl 12 as shown in Fig. 3, the frequency is swept by the drive circuit 20 without changing driving voltage and the frequency having the maximum amplitude is detected to be set as the resonance frequency (step S1 in Fig. 2).

Next, the piezoelectric vibrator 16 is driven by the drive circuit 20 at thus set amplitude and resonance frequency thereof in the same manner as drive condition (step S2 of Fig. 2).

When the parts feeder 10 is switched from the adjustment mode to the operation mode, the parts feeder 10 conducts a predetermined adjustment process and switches to the operation mode.

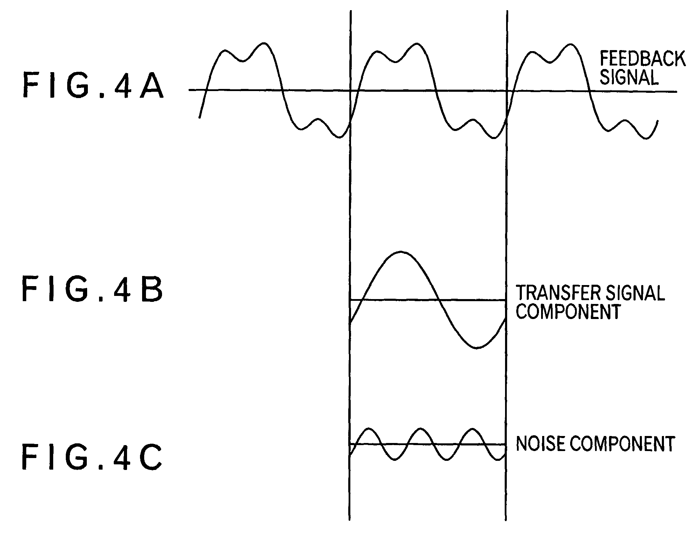

The parts feeder 10 drives the piezoelectric vibrator 16 by the drive circuit 20. The vibration of the bowl 12 vibrated by the drive is detected by the vibration sensor 24 and the voltage signal is inputted to the A/D conversion input terminal of the control portion 22. The control portion 22 samples the inputted voltage signal by a predetermined cycle, e.g. by an interval dividing the vibration frequency by thirty-two (see Fig. 4(A)). The sampled feedback signal is converted into a digital signal, the digitalized vibration signal being processed with discrete Fourier transform by the Fourier transformer 41. The frequency of the signal applied with Fourier transform is analyzed by the separator 42. In the present embodiment, the Fourier-transformed primary wave is the transfer signal component of the piezoelectric vibrating unit 14 etc. (see Fig. 4(B)), and the secondary wave or more is the noise component (see Fig. 4(C)). The amplitude, phase difference relative to the drive signal and resonance frequency of the transfer signal wave are calculated (step S3 of Fig. 2) and are stored in the nonvolatile memory 30 (step S4 of Fig. 2).

The above measurement process of the resonance frequency (step S1 of Fig. 2) and the measurement process of the phase difference and the amplitude (steps S2 to S4 of Fig. 2) are automatically conducted based on a predetermined program. The amplitude of the piezoelectric vibrating unit 14 in driving at the resonance frequency is set by the vibration setting circuit 26.

After the above adjustment, when the parts feeder is actually operated for feeding parts, the mode setting circuit 28 switches the mode into the operation mode.

In the operation mode, the piezoelectric vibrator 16 is driven by the drive circuit 20 at the resonance frequency and amplitude stored in the nonvolatile memory 30 (step S5 of Fig. 2).

At this time, the vibration of the bowl 12 by the drive circuit 20 is detected by the vibration sensor 24 and is outputted to the control portion 22. The control portion 22 converts the obtained feedback signal from analog to digital signal. The obtained digitalized vibration signal is applied with Fourier-transform, thereby separating the transfer signal component of the bowl 12 (Fig. 4(B)) and the noise component (Fig. 4(C)), where the phase difference relative to the drive signal for driving the drive circuit 20 is calculated by the transfer signal component.

The signal obtained by the vibration sensor 24 is controlled to be a predetermined amplitude. Further, the control portion 22 controls the vibration frequency of the piezoelectric vibrator 16 so that the phase difference in setting the resonance frequency becomes equal to the phase value stored during the adjustment mode (step S7 of Fig. 2).

The control process continues at a predetermined interval during operation of the piezoelectric vibrating parts feeder 10 (during the operation mode). On the other hand, when the parts feeder 10 is switched to the adjustment mode, the above-described steps S1 to S4 are executed.

According to the control method and apparatus of the piezoelectric vibrating parts feeder of the present embodiment, since the signal obtained by the vibration sensor 24 is applied with Fourier-transform and only the signal component effecting on transfer and selection of components is extracted during the feedback control of the piezoelectric vibrating unit 14, an accurate control of constant amplitude is possible.

Further, the initial phase of the signal from the vibration sensor 24 can be calculated without using a special phase sensor, so that the resonance frequency can be easily and automatically tracked.

The vibration signal can be easily and accurately obtained by Fourier transform, so that the drive can be accurately controlled by accurately detecting amplitude and phase.

Incidentally, the scope of the present embodiment is not restricted to the above embodiment, but the feedback signal may be obtained using piezoelectric output of the piezoelectric element without using the vibration sensor. The feedback signal can be directly obtained from the piezoelectric element by suspending the drive signal per a predetermined cycle or by driving at a frequency different from the drive frequency and detecting the output signal from the piezoelectric element at the time. Such an arrangement can achieve control of constant vibration as well as constant amplitude. Further, the resonance frequency can be automatically tracked.

The present invention can be applied not only to the parts feeder using the piezoelectric vibrator but also to an electromagnetic vibration parts feeder using an electromagnet as a vibration element. The specific arrangement and shape of the discharger can be designed for the actual bowl and transfer trough etc.

## Claims

1. A parts feeder (10) including: a vibrating unit (14) comprising a vibration element (16) for vibrating a parts discharger (12); a drive circuit (20) for driving the vibration element (16); and a control portion (22) for sending drive signal of a predetermined drive frequency to the drive circuit (20) to vibrate the vibration element (16) at the drive frequency, wherein
the control portion (22) has a Fourier transformer (41) that feeds back and applies Fourier transform on a detection signal indicating vibration of the vibration element (16), a separator (42) for separating the transformed feedback signal into a transfer signal component working for transferring parts and a noise component other than the transfer signal component, and a drive controller (43) for controlling the drive circuit based on the separated transfer signal component.
**characterized in that**
a vibration sensor (24) is provided on a part of the vibrating unit (14) or the discharger (12) for detecting vibration of the vibration element.

2. The parts feeder according to claim 1, wherein the Fourier transformer (41) samples the feedback signal indicating the vibration of the vibration element (16) and converts from analog to digital at a predetermined cycle to conduct Fourier analysis.

3. A control method of a parts feeder (10) including : a vibrating unit (14) comprising a vibration element (16) for vibrating a parts discharger (12); a drive circuit (20) for driving the vibration element (16); and a control portion (22) for sending drive signal of a predetermined drive frequency to the drive circuit (20) to vibrate the vibration element (16) at the drive frequency, wherein
detection signal showing the vibration of the vibration element is fed back and applied with Fourier transform by the control portion(22) to separate the converted feedback signal into a transfer signal component working for transferring parts and a noise component other than the transfer signal component, the drive circuit being controlled based on the separated transfer signal component,
**characterized in that**
the vibration is detected by a vibration sensor (24) provided on a part of the vibrating unit (14) or the discharger (12), the vibration signal being used as the feedback signal.

4. The control method of a parts feeder according to claim 3, wherein the feedback signal indicating the vibration of the vibration element (16) is sampled and converted from analog to digital at a predetermined cycle to conduct Fourier analysis by the control portion (22).

## Patentansprüche

1. Teilezuführeinrichtung (10), umfassend: eine Vibrationseinheit (14), umfassend ein Vibrationselement (16) zum Versetzen einer Teileaustrageinrichtung (12) in Vibrationen; einen Antriebskreis (20) zum Antreiben des Vibrationselements (16); und einen Steuerungsabschnitt (22) zum Senden eines Antriebssignals von einer vorgegebenen Antriebsfrequenz zu dem Antriebskreis (20), um das Vibrationselement (16) mit der Antriebsfrequenz in Vibrationen zu versetzen, wobei
der Steuerungsabschnitt (22) einen Fourier-Transformator (41) aufweist, der ein Erfassungssignal, welches die Vibration des Vibrationselements (16) anzeigt, rückführt und einer Fourier-Transformation unterzieht, einen Separator (42) zum Trennen des transformierten Rückführungssignals in eine Transfersignalkomponente, die zum Transferieren von Teilen dient, und eine Rauschkomponente, welche nicht die Transfersignalkomponente ist, und eine Antriebssteuerung (43) zum Steuern des Antriebskreises auf der Basis der abgetrennten Transfersignalkomponente,
**dadurch gekennzeichnet, dass**
ein Vibrationssensor (24) an einem Teil der Vibrationseinheit (14) oder der Austrageinrichtung (12) zum Erfassen von Vibrationen des Vibrationselements vorgesehen ist.

2. Teilezuführeinrichtung nach Anspruch 1, wobei der Fourier-Transformator (41) das Rückführungssignal, welches die Vibration des Vibrationselementes (16) anzeigt, abtastet und mit einem vorgegebenen Zyklus von analog in digital umwandelt, um eine Fourier-Analyse durchzuführen.

3. Steuerungsverfahren für eine Teilezuführeinrichtung (10), umfassend: eine Vibrationseinheit (14), umfassend ein Vibrationselement (16) zum Versetzen einer Teileaustrageinrichtung (12) in Vibrationen; einen Antriebskreis (20) zum Antreiben des Vibrationselements (16); und einen Steuerungsabschnitt (22) zum Senden eines Antriebssignals von einer vorgegebenen Antriebsfrequenz zu dem Antriebskreis (20), um das Vibrationselement (16) mit der Antriebsfrequenz in Vibrationen zu versetzen, wobei
ein Erfassungssignal, welches die Vibration des Vibrationselementes anzeigt, durch den Steuerungsabschnitt (22) rückgeführt und einer Fourier-Transformation unterzogen wird, um das umgewandelte Rückführungssignal in eine Transfersignalkomponente, die zum Transferieren von Teilen dient, und eine Rauschkomponente, welche nicht die Transfersignalkomponente ist, zu trennen, wobei der Antriebskreis auf der Basis der abgetrennten Transfersignalkomponente gesteuert wird,
**dadurch gekennzeichnet, dass**
die Vibration durch einen Vibrationssensor (24) erfasst wird, der an einem Teil der Vibrationseinheit (14) oder der Austrageinrichtung (12) vorgesehen ist, wobei das Vibrationssignal als das Rückführungssignal verwendet wird.

4. Steuerungsverfahren einer Teilezuführeinrichtung nach Anspruch 3, wobei das Rückführungssignal, welches die Vibration des Vibrationselements (16) anzeigt, durch den Steuerungsabschnitt (22) abgetastet und mit einem vorgegebenen Zyklus von analog in digital umgewandelt wird, um eine Fourier-Analyse durchzuführen.

## Revendications

1. Dispositif d'approvisionnement (10) en pièces comprenant : une unité vibrante (14) comprenant un élément vibratoire (16) destiné à faire vibrer un distributeur (12) de pièces, un circuit d'attaque (20) pour piloter l'élément vibratoire (16), et une partie commande (22) pour envoyer un signal d'attaque ayant une fréquence d'attaque prédéterminée au circuit d'attaque (20) pour faire vibrer l'élément vibratoire (16) à la fréquence d'attaque, dans lequel
la partie commande (22) comporte un dispositif de transformée de Fourier (41) qui réinjecte et applique une transformée de Fourier sur un signal de détection indiquant la vibration de l'élément vibratoire (16), un séparateur (42) pour diviser le signal de rétroaction transformé en une composante de signal de transfert qui travaille pour les pièces en cours de transfert et une composante de bruit autre que la composante de signal de transfert, et un contrôleur d'attaque (43) pour commander le circuit d'attaque d'après la composante de signal de transfert séparée,
**caractérisé en ce qu'**un capteur de vibrations (24) est placé sur une partie de l'unité vibrante (14) ou du distributeur (12) pour détecter les vibrations de l'élément vibratoire.

2. Dispositif d'approvisionnement en pièces selon la revendication 1, dans lequel le dispositif de transformée de Fourier (41) échantillonne le signal de rétroaction indiquant la vibration de l'élément vibratoire (16) et effectué une conversion analogique-numérique avec un cycle prédéterminé pour réaliser une analyse de Fourier.

3. Procédé de commande d'un dispositif d'approvisionnement (10) en pièces comprenant : une unité vibrante (14) comprenant un élément vibratoire (16) destiné à faire vibrer un distributeur (12) de pièces, un circuit d'attaque (20) pour piloter l'élément vibratoire (16), et une partie commande (22) pour envoyer un signal d'attaque ayant une fréquence d'attaque prédéterminée au circuit d'attaque (20) pour faire vibrer l'élément vibratoire (16) à la fréquence d'attaque, dans lequel
la partie commande (22) réinjecte un signal de détection représentant la vibration de l'élément vibratoire et lui applique une transformée de Fourier pour diviser le signal de rétroaction converti en une composante de signal de transfert qui travaille pour les pièces en cours de transfert et une composante de bruit autre que la composante de signal de transfert, le circuit d'attaque étant commandé d'après la composante de signal de transfert séparée,
**caractérisé en ce que** la vibration est détectée par un capteur de vibrations (24) placé sur une partie de l'unité vibrante (14) ou du distributeur (12), le signal de vibration étant utilisé en tant que ledit signal de rétroaction.

4. Procédé de commande d'un dispositif d'approvisionnement en pièces selon la revendication 3, dans lequel le signal de rétroaction indiquant la vibration de l'élément vibratoire (16) est échantillonné et converti d'analogique à numérique avec un cycle prédéterminé pour réaliser une analyse de Fourier par la partie commande (22).
